# EUROPÄISCHE PATENTSCHRIFT

(11) **EP 1 719 582 B1**
(45) Veröffentlichungstag und Bekanntmachung des Hinweises auf die Patenterteilung: **31.12.2008**
(21) Anmeldenummer: 06006510.9
(22) Anmeldetag: 29.03.2006
(51) Int. Cl.: B24B 13/00, B24B 27/00, B24B 41/00

(54) **Hochleistungs-Fräs-und Drehmaschine sowie Verfahren zur Bearbeitung von insbesondere Brillengläsern**
High-speed milling and turning machine and method of machining especially spectacle glasses
Machine à fraiser et tourner à grand rendement et procédé de façonner en particulier des verres de lunettes

(30) Priorität: 06.05.2005 DE 102005021639
(43) Veröffentlichungstag der Anmeldung: 08.11.2006
(73) Patentinhaber: Satisloh GmbH, 35578 Wetzlar (DE)
(72) Erfinder: Fiedler, Udo, 35633 Lahnau (DE); Hanisch, Manfred, 35625 Hüttenberg (DE); Tross, Karl-Heinz, 35630 Ehringshausen (DE); Wallendorf, Steffen, 35398 Giessen (DE); Schäfer, Holger, 35789 Weilmünster (DE)
(74) Vertreter: Oppermann, Mark

(56) Entgegenhaltungen:
- EP-A- 1 291 106
- WO-A-02/06005
- FR-A- 2 575 101
- US-A- 2 994 164
- US-A- 4 829 716
- US-A1- 2002 006 764
- PATENT ABSTRACTS OF JAPAN Bd. 009, Nr. 111 (M-379), 15. Mai 1985 (1985-05-15) & JP 59 232758 A (MATSUSHITA DENKI SANGYO KK), 27. Dezember 1984 (1984-12-27)

## Beschreibung

### TECHNISCHES GEBIET

Die vorliegende Erfindung bezieht sich auf eine Hochleistungs-Fräs- und Drehmaschine nach dem Oberbegriff des Patentanspruchs 2 sowie auf ein Verfahren zur Bearbeitung von Brillengläsern. Ein Beispiel einer solchen Maschine ist aus der DD 120 146 A1 bekannt; ein Beispiel eines solchen Verfahrens ist in der EP 1 291 106 A2 offenbart. Die Erfindung bezieht sich hier speziell auf die industrielle Bearbeitung von Rezeptflächen an Brillenlinsen aus Kunststoffen, wie Polycarbonat, CR39 und sogenannte "High Index" Materialien.

### STAND DER TECHNIK

Üblicherweise liegt bei der Bearbeitung von Kunststoff-Brillengläsern ein aus Kunststoff spritzgegossener Brillenglasrohling, auch "Blank" genannt, vor, der eine standardisierte endbearbeitete konvexe Außenfläche mit z.B. sphärischer oder progressiver Form aufweist. Die in der Regel konkaven Innen- bzw. Rezeptflächen erhalten mittels spanender Bearbeitung eine sphärische, asphärische, torische, atorische, progressive oder Freiformgeometrie (z.B. Gleitsichtflächen), je nach der gewünschten optischen Wirkung. Der typische konventionelle Ablauf bei der Innenflächenbearbeitung sieht nach dem Aufblocken des Brillenglasrohlings mit seiner Außenfläche auf einem Blockstück einen Fräs- oder Drehbearbeitungsprozeß zur Herstellung der optisch aktiven Form vor, in der Regel gefolgt von einem Feinschleifoder Polierprozeß zur Erzielung der notwendigen Oberflächengüte.

Zur Beschleunigung der Bearbeitung in der industriellen Fertigung von Brillengläsern ist es bereits bekannt, zwei Brillengläser gleichzeitig zu bearbeiten. So haben die Firmen Haruchika, Japan (US 4,662,119) und Comes, Italien (siehe die EP 0 090 752 A1 der Firma EFOP) - ebenso wie die Anmelderin - bereits in den achtziger Jahren Maschinen zur Bearbeitung sphärischer Brillengläser hergestellt; auch wurden von der Anmelderin Transferlinien zur Bearbeitung torischer Brillengläser produziert. Diese Transferanlagen bestanden aus Einzelmaschinen zum Schleifen, Feinschleifen und Polieren, die mittels integrierter oder externer Ladesysteme beschickt wurden. Zum Transfer der Brillengläser von einer Bearbeitungsstation zur nächsten waren Bänder, Linearzylinder oder Schienen / Schubstangen vorgesehen. Zum Teil waren die Maschinen auf einem gemeinsamen Untergestell aufgeschraubt, was die für den Transfer der Werkstücke notwendige genaue Positionierung der Einheiten zueinander gewährleistete. Es handelte sich jedoch um Einzelmaschinen mit separaten Arbeitsräumen, die jeweils mittels separater Ladeeinrichtungen beschickt wurden, und die wiederum zum Transfer der Werkstücke von einer Bearbeitung zur nächsten zusätzliche Einrichtungen benötigten.

Weiterhin bekannt sind Fräsmaschinen insbesondere zur Vorbearbeitung von Brillengläsern (EP 0 758 571 A1) und Fast-Tool-Drehmaschinen zur Feinbearbeitung von Kunststoff-Brillengläsern, bei denen ein Drehmeißel entweder linear reziprozierend (WO 02/06005 A1) oder rotativ (WO 99/33611 A1) hochdynamisch bewegt werden kann, so daß nicht-rotationssymmetrische Linsenflächen im Drehverfahren erzeugt werden können, sowie kombinierte Fräs-Dreh-Maschinen (EP 1 291 106 A2). Soweit überhaupt in einer Maschine gefräst und gedreht wurde, wurde seriell gearbeitet: Das Brillenglas wurde zuerst gefräst und anschließend gedreht. Während des Fräsens wurde der Drehteil der Maschine nicht genutzt bzw. konnte nicht genutzt werden, während des Drehens hingegen wurde der Frästeil nicht benutzt bzw. konnte nicht benutzt werden, so daß es bei der jeweiligen Bearbeitungseinheit zu erheblichen Stillstandszeiten kam.

Ausgehend vom obigen Stand der Technik gilt es ferner, Lösungen zu finden, die in der Lage sind, den bisher für das Handling insbesondere des Werkstücks notwendigen Aufwand unter Nutzung der maschineninternen CNC-Achsen erheblich zu reduzieren.

### DARSTELLUNG DER ERFINDUNG

Der vorliegenden Erfindung liegt die Aufgabe zugrunde, eine möglichst preisgünstige, vollautomatisierte Hochleistungs-Fräs- und Drehmaschine zu schaffen, und ein ebensolches Verfahren anzugeben, mit der/dem insbesondere alle gängigen Brillenglas-Kunststoffmaterialien und alle Formen einschließlich Freiformen und ggf. Randvorbearbeitung in extrem kurzer Zeit mit hoher Zerspanungsleistung und großer Flächengenauigkeit und -güte bearbeitet werden können.

Diese Aufgabe wird durch die im Patentanspruch 1 bzw. 2 angegebenen Merkmale gelöst. Vorteilhafte bzw. zweckmäßige Weiterbildungen der Erfindung sind Gegenstand der Patentansprüche 3 bis 14.

Nach einem ersten Aspekt der Erfindung werden bei der Bearbeitung von Brillengläsern als Werkstücke mit einer Maschine, die in einem gemeinsamen Arbeitsraum wenigstens eine Fräseinheit und wenigstens eine Dreheinheit aufweist, mindestens zwei Werkstücke gleichzeitig in dem Arbeitsraum bearbeitet, von denen das eine gefräst wird, während das andere gedreht wird. So kann während der Vorbearbeitung eines Brillenglases mittels der Fräseinheit, die mit hoher Zerspanungsleistung erfolgen kann, zugleich ein anderes Brillenglas mittels der Dreheinheit mit großer Flächengenauigkeit und -güte weiter- bzw. fertigbearbeitet werden. Im Ergebnis läßt sich insbesondere ein sehr hoher Ausstoß bzw. Durchsatz an Brillengläsern erzielen, weshalb das erfindungsgemäße Verfahren und die erfindungsgemäße Maschine für die industrielle Produktion von Brillengläsern besonders prädestiniert sind.

Nach einem zweiten Aspekt der Erfindung besitzt eine Maschine zur Bearbeitung von insbesondere Brillengläsern als Werkstücke wenigstens eine ein Maschinengestell aufweisende Fräseinheit und wenigstens eine ein Maschinengestell aufweisende Dreheinheit, als Bearbeitungseinheiten, deren Maschinengestelle voneinander im wesentlichen schwingungsentkoppelt sind, wofür mindestens eines der Maschinengestelle über Schwingungsentkopplungselemente auf einem gemeinsamen Maschinenrahmen montiert ist, wobei die Maschinen gestelle der Fräseinheit und der Dreheinheit einen gemeinsamen Arbeitsraum begrenzen, in dem die Werkstücke gleichzeitig mit der Fräseinheit und der Dreheinheit bearbeitbar sind. Die somit mögliche gleichzeitige Fräs- und Drehbearbeitung von Brillengläsern sorgt - wie oben schon angesprochen - für einen sehr hohen Durchsatz an Brillengläsern (z.B. 140 Brillengläser pro Stunde). Infolge der erfindungsgemäßen weitgehenden Schwingungsentkopplung der Maschinengestelle lassen sich hierbei (dennoch) Flächen von sehr hoher Qualität erzeugen, bei denen ein nachgeschalteter, die Bearbeitungszeit des individuellen Brillenglases wieder erhöhender Polierprozeß ggf. entbehrlich ist.

In einer vorteilhaften Weiterbildung der Erfindung weist jede Bearbeitungseinheitmindestens ein Werkzeug sowie eine Werkstückspindeleinheit auf, mittels der das zu bearbeitende Werkstück wenigstens in einer quer zum jeweiligen Werkzeug verlaufenden Achsrichtung bewegbar ist, wobei die Werkstückspindeleinheiten derart zueinander angeordnet sind, daß besagte Achsrichtungen im wesentlichen senkrecht zueinander stehen. Durch diese Anordnung der Werkstückspindeleinheiten baut die erfindungsgemäße Maschine zum einen vorteilhaft kompakt. Zum anderen ist es möglich, die Werkstückspindeln mit daran gehaltenen Brillengläsern sehr dicht an- bzw. übereinander zu positionieren, wodurch ein einfacher und besonders schneller weil simultaner automatischer Werkstückwechsel möglich ist.

Im Hinblick auf eine möglichst weitgehende Schwingungsentkopplung ist es bevorzugt, wenn sich die Maschinengestelle der Bearbeitungseinheiten nicht berühren. Die Maschinengestelle aller Bearbeitungseinheiten können über Schwingungsentkopplungselemente auf dem gemeinsamen Maschinenrahmen montiert sein. Es ist grundsätzlich aber auch denkbar, daß nur eines der Maschinengestelle über Schwingungsentkopplungselemente auf dem gemeinsamen Maschinenrahmen montiert ist, während das andere Maschinengestell unmittelbar auf dem Maschinenrahmen angebracht ist. Bei den Schwingungsentkopplungselementen handelt es sich vorzugsweise um handelsübliche Luftfederelemente. Für ein gutes Schwingungsverhalten der Maschine ist es ferner von Vorteil, wenn die Maschinengestelle der Bearbeitungseinheiten aus Polymerbeton bestehen, was eine hohe Dämpfung bewirkt.

Des weiteren kann jeder Bearbeitungseinheit eine Werkstückspindeleinheit zugeordnet sein, die eine Werkstückspindel mit einer Werkstück-Drehachse aufweist, wobei jede Werkstückspindel mittels einer Kreuztischanordnung CNC-lagegeregelt in einer Ebene bewegbar ist, welche die jeweilige Werkstück-Drehachse enthält. Wenngleich prinzipiell auch eine Aufteilung der Bewegungen in besagter Ebene auf Werkstück und Werkzeug denkbar ist, um die hier für die Bearbeitung des Werkstücks erforderlichen Relativbewegungen zwischen Werkstück und Werkzeug zu erzeugen, ist die getroffene Anordnung mit diesen Bewegungen auf der Werkstückseite wiederum im Hinblick auf ein optimiertes Schwingungsverhalten bevorzugt, bei dem sich die Bewegungen des Werkstücks nicht oder nur möglichst wenig auf die Bewegungen des Werkzeugs auswirken und umgekehrt.

Vorteilhaft umfaßt die Kreuztischanordnung jeder Werkstückspindeleinheit Führungsschienen und Schlitten, wobei wenigstens diese Elemente, d.h. die Führungsschienen und die Schlitten der Werkstückspindeleinheiten als Gleichteile ausgebildet sind, was insbesondere Kostenvorteile mit sich bringt.

Weiterhin kann es sich bei einer der Bearbeitungseinheiten um eine Dreheinheit mit wenigstens zwei Fast-Tool-Anordnungen handeln, die jeweils einen mittels eines Aktuators axial bewegbaren Schlitten für einen Drehmeißel aufweisen, um letzteren in einer Fast-Tool-Bewegungsebene zu bewegen. Mit solchen Fast-Tool-Anordnungen lassen sich insbesondere an Brillengläsern aus Kunststoff beliebige Geometrien sehr schnell mit hoher Flächengenauigkeit und -güte bearbeiten. Wenn hierbei die Bewegungen der Schlitten der Fast-Tool-Anordnungen unabhängig voneinander regelbar sind, können die Schlitten insbesondere gegenläufig bewegt werden, um Schwingungen weitgehend zu kompensieren. Der Einsatz rotativer Fast-Tool-Anordnungen ist grundsätzlich auch denkbar.

Einem hohen Werkstückdurchsatz ist es weiterhin förderlich, wenn die Bearbeitungseinheiten mittels einer Ladeeinrichtung simultan mit Werkstücken beschickbar sind. Hierbei kann die Ladeeinrichtung zweckmäßig einen Kopf aufweisen, der von einer Position, in der er einem Arbeitskasten bzw. einem Transportband für die Werkstücke gegenüberliegt, um eine Schwenkachse in den Arbeitsraum der Maschine hinein verschwenkbar ist und umgekehrt. Der Kopf der Ladeeinrichtung kann ferner eine Mehrzahl von auf einem gemeinsamen, um eine Drehachse drehbaren Drehteller angeordneten, über Zylinder in axialer Richtung ausfahrbaren Saugern zum Ansaugen und Halten der Werkstücke mittels Vakuum besitzen. Einer solchen "pneumatischen" Lösung wird gegenüber einen ebenfalls denkbaren "mechanischen" Lösung mit Greifern od. dgl. insbesondere im Hinblick auf eine hohe Werkstückwechselgeschwindigkeit bei geringer Gefahr, daß die Werkstücke beschädigt werden, der Vorzug gegeben. Schließlich kann die Anordnung so getroffen sein, daß die Werkstückspindeln der Bearbeitungseinheiten mittels der zugeordneten Kreuztischanordnungen quer zu den Werkstück-Drehachsen in eine Be-/ Entladeposition bewegbar sind, in der die Werkstück-Drehachsen mit jeweils einem Zylinder des im Arbeitsraum positionierten Kopfes der Ladeeinrichtung axial ausgefluchtet sind, worauf die Werkstückspindeln mittels der Kreuztischanordnungen entlang der Werkstück-Drehachsen in Richtung des Kopfes der Ladeeinrichtung bewegbar sind, um die Werkstücke zu wechseln, so daß vorteilhaft die ohnehin vorhandenen CNC-Achsen der Maschine auch für den Werkstückwechsel benutzt werden, mithin die Ladeeinrichtung keine eigenen CNC-Achsen besitzen muß.

Weitere Merkmale und Vorteile der Erfindung ergeben sich aus der nachfolgenden Beschreibung eines bevorzugten Ausführungsbeispiels.

### KURZE BESCHREIBUNG DER ZEICHNUNGEN

Im folgenden wird die Erfindung anhand eines bevorzugten Ausführungsbeispiels unter Bezugnahme auf die beigefügten, teilweise schematischen Zeichnungen näher erläutert. In den Zeichnungen zeigen:
- Fig. 1: eine perspektivische Ansicht einer erfindungsgemäßen Hochleistungs-Fräs- und Drehmaschine zur Bearbeitung von Brillengläsern, von schräg vorne rechts/oben, die werkzeugmäßig mit einer Fräseinheit und zwei eine Dreheinheit bildenden Fast-Tool-Anordnungen ausgestattet ist, wobei letzteren eine erste Werkstückspindeleinheit zugeordnet ist, während der Fräseinheit eine zweite Werkstückspindeleinheit zugeordnet ist;
- Fig. 2: eine perspektivische Ansicht der Maschine gemäß Fig. 1 von schräg vorne rechts/oben, mit einer zusätzlich vorgesehenen Ladeeinrichtung für den Werkstückwechsel;
- Fig. 3: eine Vorderansicht der Maschine gemäß Fig. 2;
- Fig. 4: eine Seitenansicht der Maschine gemäß Fig. 2 von links in Fig. 3;
- Fig. 5: eine Draufsicht auf die Maschine gemäß Fig. 2 mit Blickrichtung von oben in Fig. 3;
- Fig. 6 bis 10: perspektivische Ansichten der Maschine gemäß Fig. 2 von schräg vorne links/oben, die einen Werkstückwechsel veranschaulichen; und
- Fig. 11: eine schematische Schnittansicht der Maschine gemäß Fig. 2 entsprechend der Schnittverlaufslinie XI-XI in Fig. 3, die die Anordnung von Luftfederelementen zur Lagerung der Bearbeitungseinheiten auf einem gemeinsamen Maschinenrahmen veranschaulicht.

### DETAILLIERTE BESCHREIBUNG DES AUSFÜHRUNGSBEISPIELS

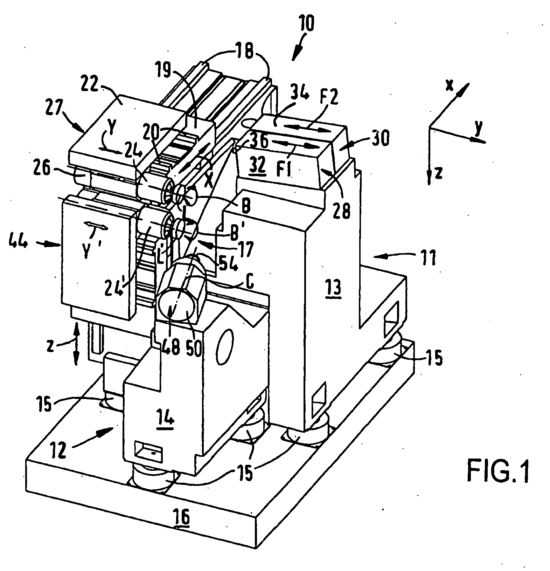

Die Fig. 1 bis 11 zeigen in z.T. schematischer Darstellung eine CNC-geregelte Hochleistungs-Fräs- und Drehmaschine 10 zur Bearbeitung von Brillengläsern L aus Kunststoff in einem rechtwinkligen kartesischen Koordinatensystem, in dem die kleinen Buchstaben x, y bzw. z die Breitenrichtung (x), die Längenrichtung (y) und die Höhenrichtung (z) der Maschine 10 bezeichnen. Die Verkleidungen und der Spritzschutz der Maschine 10 sind in den Figuren der besseren Übersichtlichkeit halber weggelassen.

Gemäß den Fig. 1 bis 5 besitzt die Maschine 10 eine allgemein mit 11 bezifferte Dreheinheit und eine allgemein mit 12 bezifferte Fräseinheit, die voneinander schwingungsisoliert sind. Die Dreheinheit 11 weist ein erstes Maschinengestell 13 aus Polymerbeton auf, während die Fräseinheit 12 ein zweites Maschinengestell 14 hat, welches ebenfalls aus Polymerbeton besteht. Das erste Maschinengestell 13 und das zweite Maschinengestell 14, die sich nicht berühren, sind über geeignete Schwingungsentkopplungselemente, etwa Luftfederelemente 15, wie sie von der EFFBE GmbH, Raunheim, Deutschland unter der Handelsbezeichnung "Level Mount®" erhältlich sind, auf einem gemeinsamen Maschinenrahmen 16 montiert. Das erste Maschinengestell 13 und das zweite Maschinengestell 14 begrenzen einen gemeinsamen Arbeitsraum 17, in dem sowohl die Drehbearbeitung als auch die Fräsbearbeitung stattfindet.

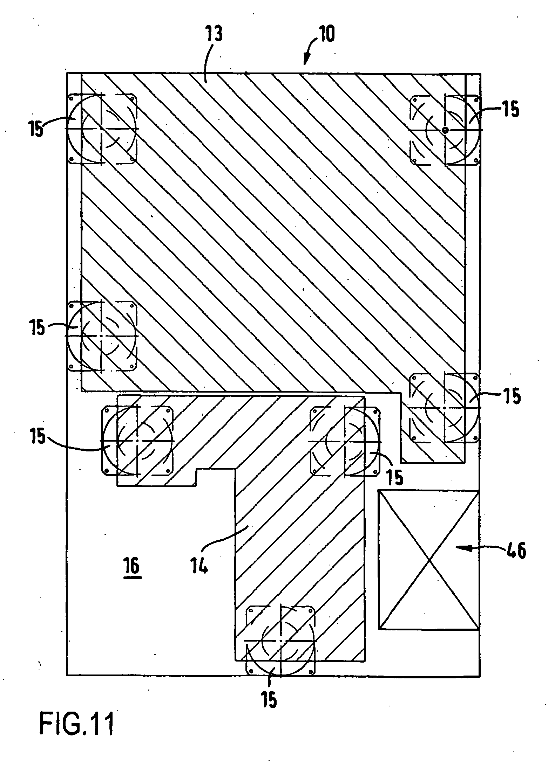

Wie insbesondere die Fig. 11 zeigt, hat das erste Maschinengestell 13 einen im wesentlichen rechteckigen Querschnitt, während das zweite Maschinengestell 14 einen im wesentlichen L-förmigen Querschnitt aufweist. Anzahl und Lage der die voneinander beabstandeten Maschinengestelle 13, 14 gegenüber dem gemeinsamen Maschinenrahmen 16 abstützenden Luftfederelemente 15 sind hierbei derart gewählt, daß für das erste Maschinengestell 13 vier Luftfederelemente 15 vorgesehen sind, die sich im Bereich der Ecken des im wesentlichen rechteckigen Querschnitts des ersten Maschinengestells 13 befinden, während für das zweite Maschinengestell 14 drei Luftfederelemente 15 vorgesehen sind, mit jeweils einem Luftfederelement 15 am Ende des jeweiligen Schenkels des im wesentlichen L-förmigen Querschnitts des zweiten Maschinengestells 14 und einem Luftfederelement 15 im Bereich der durch die beiden Schenkel des Querschnitts gebildeten Ecke. Die Luftfederelemente 15 für das erste Maschinengestell 13 einerseits und die Luftfederelemente 15 für das zweite Maschinengestell 14 andererseits können voneinander verschieden sein, und zwar insbesondere derart, daß das zur Dreheinheit 11 gehörende erste Maschinengestell 13 gegenüber dem Maschinenrahmen 16 weicher gelagert ist als das zur Fräseinheit 12 gehörende zweite Maschinengestell 14. Die Luftfederelemente 15 können ferner über zugeordnete Regelventile (nicht gezeigt) mit einer Druckluftquelle (ebenfalls nicht dargestellt) verbunden sein, so daß die Luftfederelemente 15 wahlweise pneumatisch beaufschlagbar sind oder entlastet werden können, um eine definierte Position, d.h. Betriebshöhe des jeweiligen Luftfederelements 15 bei sich entsprechend der mit der jeweiligen Bearbeitungseinheit 11, 12 durchgeführten Bearbeitung verändernden Belastung einzuhalten.

Von den Bearbeitungseinheiten 11, 12 soll nun zunächst die Dreheinheit 11 näher beschrieben werden. Auf der in Fig. 1 linken Seite des Arbeitsraums 17 sind zwei Führungsschienen 18, die sich in der (horizontalen) Breitenrichtung x parallel zueinander erstrecken, auf einer in Fig. 1 oberen Montagefläche des ersten Maschinengestells 13 befestigt. Ein X-Schlitten 19, der durch zugeordnete CNC-Antriebs- und Steuerelemente (nicht gezeigt) in beiden Richtungen einer X-Achse CNC-lagegeregelt verstellbar ist, ist verschiebbar auf den Führungsschienen 18 gelagert.

Zwei weitere Führungsschienen 20, die sich in der (gleichfalls horizontalen) Längsrichtung y parallel zueinander und senkrecht zu den Führungsschienen 18 erstrecken, sind auf einer in Fig. 1 oberen Montagefläche des X-Schlittens 19 befestigt. In einer Kreuztischanordnung ist ein Y-Schlitten 22 verschiebbar auf den Führungsschienen 20 gelagert, der durch zugeordnete CNC-Antriebs- und Steuerelemente (ebenfalls nicht gezeigt) in beiden Richtungen einer Y-Achse CNC-lagegeregelt verstellbar ist.

An einer in den Fig. 1 bis 4 unteren Montagefläche des Y-Schlittens 22 ist eine Werkstückspindel 24 befestigt, die mittels eines Elektromotors 26 in der Drehzahl und dem Drehwinkel CNC-geregelt um eine Werkstück-Drehachse B drehend antreibbar ist. Die Werkstück-Drehachse B ist mit der Y-Achse ausgefluchtet. An der Werkstückspindel 24, genauer deren in den Arbeitsraum 17 hineinragenden Ende ist in an sich bekannter Weise das auf einem Blockstück aufgeblockte Brillenglas L für die Bearbeitung der Rezeptfläche des Brillenglases L derart angebracht, daß es gleichachsig mit der Werkstückspindel 24 drehen kann.

Aus der obigen Beschreibung ist soweit ersichtlich, daß die Werkstückspindel 24 mittels der Kreuztischanordnung (X-Schlitten 19, Y-Schlitten 22) CNC-lagegeregelt in einer X-Y-Ebene bewegbar ist, welche die Werkstück-Drehachse B enthält, während das Brillenglas L in Drehzahl und Drehwinkel CNC-geregelt um die Werkstück-Drehachse B drehbar ist. Diese Bauteile bilden eine erste Werkstückspindeleinheit 27, die der Dreheinheit 11 zugeordnet ist.

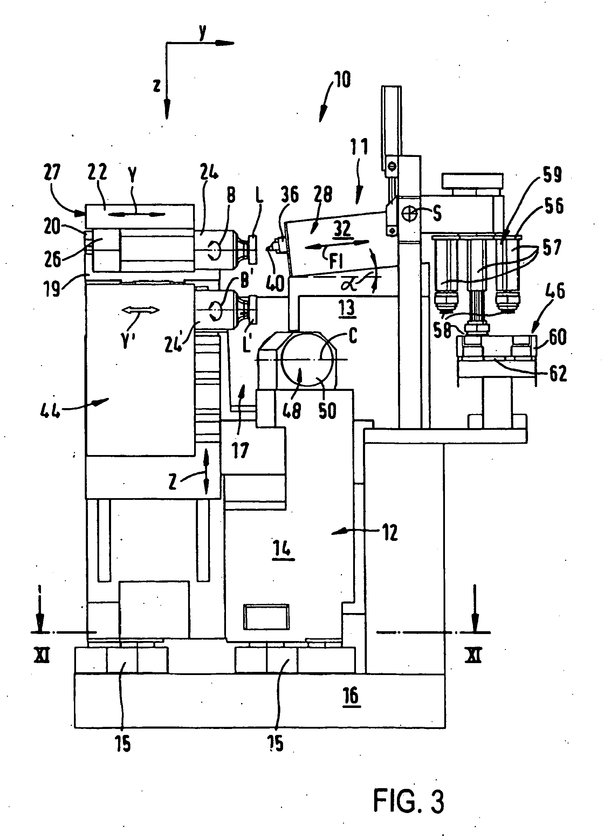

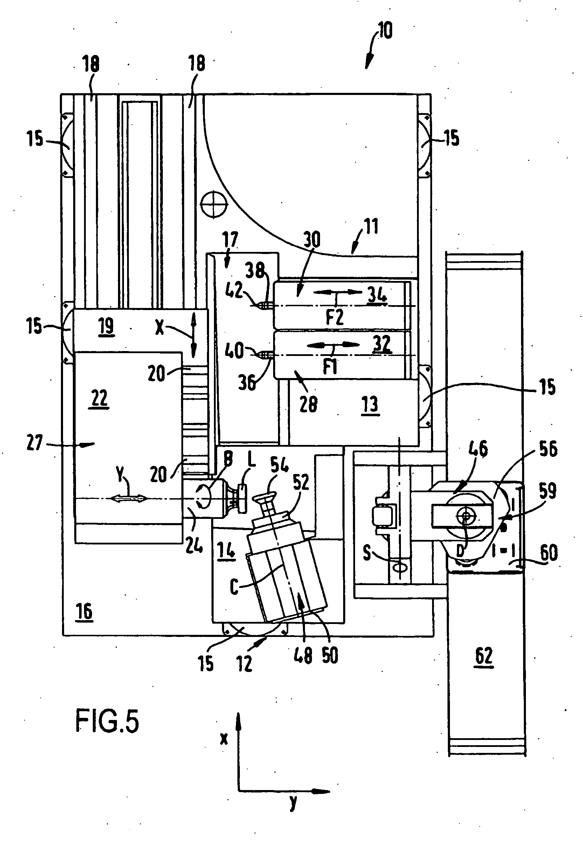

Auf der in den Fig. 1, 2, 3 und 5 rechten Seite des Arbeitsraums 17 ist/sind wenigstens eine, im dargestellten Ausführungsbeispiel zwei Fast-Tool-Anordnungen 28, 30 in Parallelanordnung vorgesehen (mehr als zwei Fast-Tool-Anordnungen sind grundsätzlich ebenfalls denkbar). Wie etwa aus der WO 02/06005 A1 bekannt ist, weist jede Fast-Tool-Anordnung 28, 30 einen Aktuator 32, 34 und einen jeweils zugeordneten Schlitten 36, 38 (auch "shuttle" genannt) auf. Während der Schlitten 36 der ersten Fast-Tool-Anordnung 28 in beiden Richtungen einer Fast-Tool-Achse F1 vermittels des Aktuators 32 axial bewegbar ist, ist der Schlitten 38 der zweiten Fast-Tool-Anordnung 30 vermittels des Aktuators 34 in beiden Richtungen einer zur ersten Fast-Tool-Achse F1 parallelen zweiten Fast-Tool-Achse F2 axial bewegbar. Hierbei ist die Lage bzw. der Hub der Schlitten 36, 38 mittels CNC unabhängig voneinander regelbar. Wie die Fig. 5 zeigt, verlaufen die Fast-Tool-Achse F1, die Fast-Tool-Achse F2, die Y-Achse und die Werkstück-Drehachse B in der Draufsicht gesehen in derselben Richtung. In der Vorderansicht gemäß Fig. 3 gesehen weicht die Richtung der Y-Achse und der Werkstück-Drehachse B einerseits indes von der Richtung der Fast-Tool-Achse F1 und der Fast-Tool-Achse F2 andererseits ab.

Im dargestellten Ausführungsbeispiel trägt jeder der Schlitten 36, 38 an seinem in den Arbeitsraum 17 hineinragenden Ende einen Drehmeißel 40, 42 (siehe Fig. 3 und 5 sowie 6 bis 10), der am jeweiligen Schlitten 36, 38 auf hier nicht näher gezeigte Art und Weise befestigt ist, so daß die Drehmeißel 40, 42 in einer Fast-Tool-Bewegungsebene (X-F1-Ebene bzw. X-F2-Ebene) bewegbar sind. An jedem Drehmeißel 40, 42 ist ein Schneidplättchen (nicht näher gezeigt) ggf. lösbar oder als Beschichtung angebracht, das eine Schneidkante ausbildet und den jeweiligen Erfordernissen entsprechend, insbesondere spezifisch für den zu bearbeitenden Werkstoff, aus polykristallinem Diamant (PKD), CVD, Naturdiamant oder aber auch Hartmetall mit oder ohne Verschleißschutz-Beschichtung bestehen kann.

Mittels der Fast-Tool-Anordnung(en) 28 (und ggf. 30) der Dreheinheit 11 kann die durch die Fräseinheit 12 vorbearbeitete . Rezeptfläche des Brillenglases L drehend nachbearbeitet werden, was unter Regelung der Bewegung des Brillenglases L in der X-Achse und ggf. der Y-Achse, d.h. in der X-Y-Ebene sowie unter Regelung der Bewegung des bearbeitenden Drehmeißels 40 (bzw. 42) in der F1-Achse (bzw. F2-Achse), d.h. in der X-F1-Ebene (bzw. X-F2-Ebene) erfolgt. Hierbei können (müssen aber nicht) die Fast-Tool-Anordnungen 28 und 30 derart angesteuert werden, daß sich der nicht an der Drehbearbeitung beteiligte Schlitten zu dem an der Drehbearbeitung beteiligten Schlitten in Gegenrichtung bewegt, so daß die Schlitten quasi gegenläufig bzw. im Gegentakt schwingen, um durch Massenkompensation zu verhindern, daß störende Schwingungen in das erste Maschinengestell 13 übertragen werden bzw. diese zu verringern, wie es in der WO 02/06005 A1 offenbart wird. Im Ergebnis sind bei der Drehbearbeitung Flächenqualitäten erzielbar, die fast der Flächenqualität entsprechen, die mit herkömmlichen Polierverfahren erzielbar ist.

Eine Besonderheit der vorbeschriebenen Maschine 10 besteht auch darin, wie weiter oben schon allgemeiner angesprochen wurde, daß die Fast-Tool-Anordnungen 28 und 30 auf einer Montagefläche des ersten Maschinengestells 13 montiert sind, die bezüglich der Montageflächen für die Kreuztischanordnung (X-Schlitten 19, Y-Schlitten 22) bzw. die Werkstückspindel 24 um einen Winkel α verkippt bzw. angestellt ist (siehe Fig. 3), so daß die Fast-Tool-Bewegungsebene (X-F1-Ebene bzw. X-F2-Ebene) bezüglich der die Werkstück-Drehachse B enthaltenden Bewegungsebene (X-Y-Ebene) der Werkstückspindel 24 schräggestellt ist. Dieser Winkel α beträgt im dargestellten Ausführungsbeispiel etwa 5°, kann aber auch etwas mehr oder etwas weniger betragen, beispielsweise im Bereich von 2° bis 10° liegen.

Durch diese Maßnahme hat eine Verstellung des Drehmeißels 40 mittels der Fast-Tool-Anordnung 28 in der F1-Achse bzw. eine Verstellung des Drehmeißels 42 mittels der Fast-Tool-Anordnung 30 in der F2-Achse zur Folge, daß die Bewegung der jeweiligen Schneidkante zwei Bewegungskomponenten erhält, nämlich eine Bewegungskomponente in der Längsrichtung y der Maschine 10 und eine Bewegungskomponente in der Höhenrichtung z der Maschine 10. Letztere kann dafür genutzt werden, den Arbeitspunkt der Schneidkante des jeweiligen Drehmeißels 40, 42 auf die Werkstück-Drehachse B der Werkstückspindel 24 auszurichten, um Höhenfehler bzw. -abweichungen der Schneidkante in Höhenrichtung z zu kompensieren.

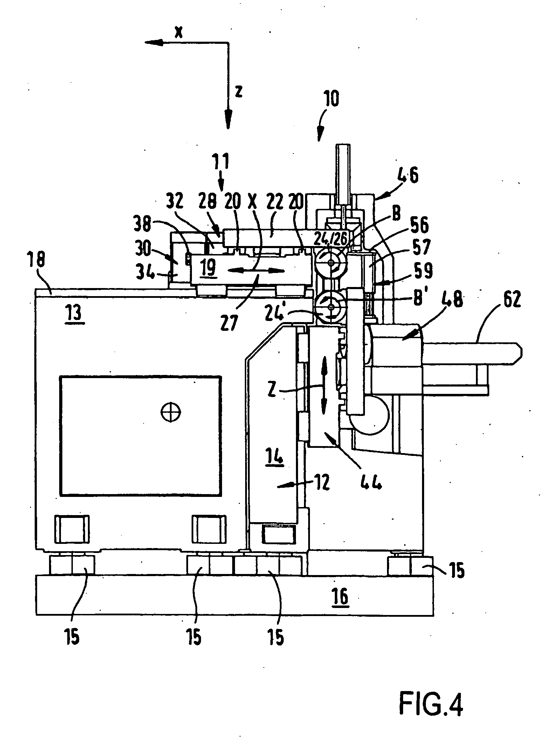

Im weiteren soll die Fräseinheit 12 besprochen werden, soweit dies für das Verständnis der vorliegenden Erfindung erforderlich erscheint. Der Fräseinheit 12 ist eine zweite Werkstückspindeleinheit 44 zugeordnet, die am zweiten Maschinengestell 14 montiert ist, wie insbesondere in den Fig. 4 und 6 bis 10 zu erkennen ist. Da die zweite Werkstückspindeleinheit 44 hinsichtlich Aufbau und Funktion prinzipiell der ersten Werkstückspindeleinheit 27 entspricht - für beide Werkstückspindeleinheiten können auch Gleichteile (z.B. Führungsschienen, Schlitten, Werkstückspindeln, Antriebe und Steuerelemente) verwendet werden - soll sie hier nur im Hinblick auf ihre Besonderheiten behandelt werden. Ein wesentlicher Gesichtspunkt ist hier der, daß die zweite Werkstückspindeleinheit 44 - die mittels ihrer Kreuztischanordnung eine in den Achsen Y' und Z CNC-lagegeregelte Bewegung der Werkstückspindel 24' in einer Y'-Z-Ebene ermöglicht, welche die Werkstück-Drehachse B' der Werkstückspindel 24' enthält, während das Brillenglas L' in Drehzahl und Drehwinkel CNC-geregelt um die Werkstück-Drehachse B' drehbar ist - senkrecht zu der ersten, im dargestellten Ausführungsbeispiel horizontal verlaufenden Werkstückspindeleinheit 27 ausgerichtet ist, so daß die jeweiligen Bewegungsebenen (X-Y-Ebene bzw. Y'-Z-Ebene) der Werkstückspindeln 24, 24' senkrecht zueinander verlaufen. Hierdurch wird zum einen eine besonders kompakte Bauform erzielt. Zum anderen ist ein vollautomatisches, sehr schnelles, simultanes Beschicken beider Bearbeitungseinheiten 11 und 12 der Maschine 10 mittels einer Dreifach-Sauger-Ladeeinrichtung 46 möglich, wie noch näher erläutert werden wird.

In den Fig. 1 bis 3 und 6 bis 10 vor dem Arbeitsraum 17 ist eine Frässpindeleinheit 48 auf einer oberen Fläche des zweiten Maschinengestells 14 montiert, wie sie aus der EP 0 758 571 A1 der Anmelderin in Aufbau und Funktion grundsätzlich bekannt ist. Die Frässpindeleinheit 48 weist gemäß insbesondere den Fig. 5 bis 10 eine mittels eines Elektromotors 50 um eine Fräser-Drehachse C drehzahlgesteuert antreibbare Frässpindel 52 auf, an deren in den Arbeitsraum 17 hineinragenden Ende ein Fräswerkzeug 54 montiert ist.

Mittels der Frässpindeleinheit 48 kann an dem Brillenglas L' ein Fräsbearbeitungsvorgang ausgeführt werden, der - entsprechend der Lehre der EP 0 758 571 A1 - einen Einstech-Arbeitsgang umfaßt, bei dem das um die Fräser-Drehachse C drehzahlgesteuert rotierende Fräswerkzeug 54 und das drehwinkelgeregelt um die Werkstück-Drehachse B' drehende Brillenglas L' in wenigstens einer der beiden Achsrichtungen Y' und Z derart lagegeregelt relativ zueinander bewegt werden, daß die Schneiden des Fräswerkzeugs 54 mindestens im Bereich des Außenrands des Brillenglases L' eine ringmuldenförmigen Ausnehmung erzeugen, bevor das Fräswerkzeug 54 in einem formgebenden Arbeitsgang entlang eines spiralförmigen Weges durch Regelung der Bewegungsbahn des Brillenglases L' in den Y'- und Z-Achsen, d.h. in der Y'-Z-Ebene über das Brillenglas L' von außen nach innen geführt wird, um weiteres Material abzutragen. Wahlfreie, wenn auch bevorzugt mitablaufende Arbeitsgänge bei diesem Fräsbearbeitungsvorgang sind die Randbearbeitung und das Facettieren des Brillenglases L'. Bei der Randbearbeitung wird mittels des rotierenden Fräswerkzeugs 54 eine Bearbeitung des Brillenglasrohlings z.B. auf die durch die Brillengestellform vorgegebene Umfangskontur vorgenommen, während bei dem Facettieren die obere bzw. innere Umfangskante des Brillenglasrohlings mittels des rotierenden Fräswerkzeugs 54 abgeschrägt bzw. abgerundet wird. Diese Verfahrensschritte sind dem Fachmann hinlänglich bekannt, so daß an dieser Stelle hierauf nicht weiter eingegangen werden soll.

Aus der obigen Beschreibung ist ersichtlich, daß beide Bearbeitungen - Fräsen (Vorbearbeiten) und Drehen (Fertigbearbeiten) - in einem gemeinsamen Arbeitsraum 17 stattfinden, wobei die Fräseinheit 12 und die Dreheinheit 11 nur ein gemeinsames Handling, eine gemeinsame Steuerung und nur eine Bedientafel (nicht gezeigt) benötigen. Dabei baut diese "Zwillingsmaschine" 10 nicht einmal größer als eine Einzelmaschine, hat vielmehr eine Stellfläche, die im wesentlichen der einer Einzelmaschine entspricht. Dadurch, daß während der Fräsbearbeitung eines Brillenglases L' durch die Fräseinheit 12 gleichzeitig ein zweites Brillenglas L auf der Dreheinheit 11 bearbeitet werden kann, ist ein hoher Ausstoß der Maschine 10 gewährleistet. Hierbei führt die Anordnung der Fräseinheit 12 und der Dreheinheit 11 derart, daß beide Werkstückfutter in einem Arbeitsraum 17 sehr dicht neben- bzw. übereinander positioniert werden können, noch zu einer erheblichen Vereinfachung des Handlings, d.h. des Wechsels der Werkstücke.

Diese für eine Kostenreduktion und eine Vereinfachung der Automation günstigen Maßnahmen bergen jedoch eine erhebliche Problematik für die Bearbeitung: Bei der Fast-Tool-Feindrehbearbeitung von Brillengläsern handelt es sich um ein Ultrapräzisions-Drehverfahren, das gegenüber äußeren Schwingungen sehr empfindlich reagiert. Die geforderte Genauigkeit der gedrehten Brillenglasflächen bewegt sich hierbei im Sub-Mikrometerbereich und die Ra-Werte im zweistelligen Nanometer-Bereich. Bei der Fräsbearbeitung auf der benachbarten Maschineneinheit 12 wird dagegen eine nicht unerhebliche Masse der zweiten Werkstückspindeleinheit 44 von ca. 80 kg mit relativ hohen Beschleunigungen und Hüben von bis zu 14 mm bewegt, was wiederum zu Vibrationen im zweiten Maschinengestell 14 führt. Diese störenden Schwingungen müssen beim Feindrehen der optischen Fläche von der Dreheinheit 11 ferngehalten werden. Hierzu sind als schwingungsabsorbierende Mittel die eingangs erwähnten Luftfederelemente 15 zwischen dem gemeinsamen Maschinenrahmen 16 und den Maschinengestellen 13, 14 der Dreheinheit 11 bzw. der Fräseinheit 12 vorgesehen.

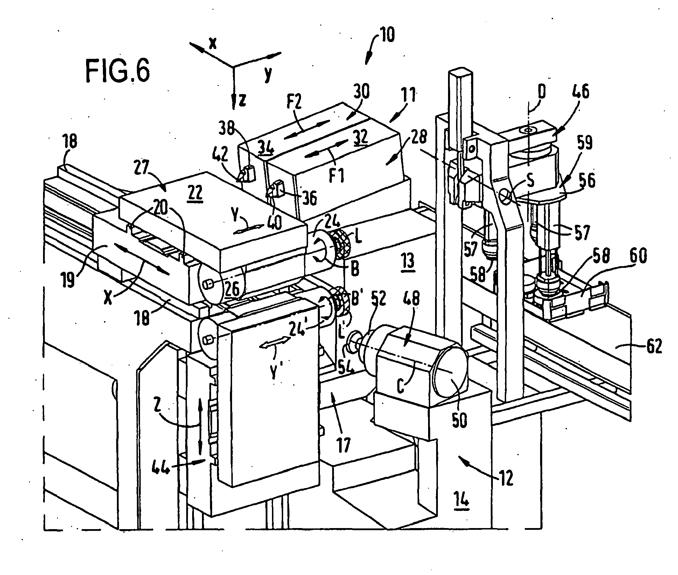

Wie bereits erwähnt, können durch die rechtwinklige Anordnung der Kreuztische, die jeweils die Werkstückspindeln 24, 24' der Maschineneinheiten 11, 12 tragen, beide Werkstückspindeln 24, 24' mit den Werkstücken L, L' zum automatischen Beschicken sehr dicht übereinander positioniert werden, um so einen einfachen und schnellen Be- und Entladevorgang zu gewährleisten. Zum Be- und Entladen ist nun als Handlingsystem eine Ladeeinrichtung 46 vorgesehen, die anhand der Fig. 6 bis 10 näher erläutert werden soll.

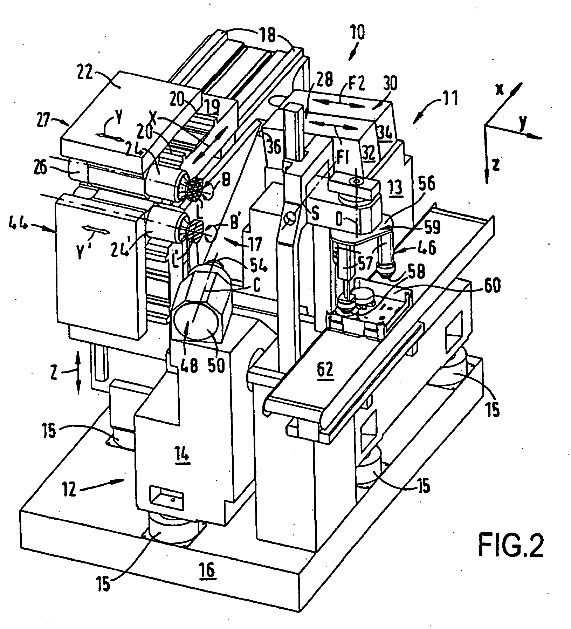

Die Ladeeinrichtung 46 arbeitet mit drei auf einem gemeinsamen Drehteller 56 angeordneten, über Zylinder 57 in axialer Richtung ausfahrbaren Saugern 58 - insgesamt kurz Saugerkopf 59 genannt - welche gleichzeitig den Rohling, die gefräste Linse und die drehbearbeitete Linse aufnehmen können. Für einen schnellen Teilewechsel muß der Saugerkopf 59 lediglich auf die beiden parallel zueinander positionierten Werkstückaufnahmen an den Werkstückspindeln 24, 24' zufahren, die bearbeiteten Linsen entnehmen, indexieren und danach den Rohling in die Aufnahme an der Werkstückspindel 24' der Fräseinheit 12 bzw. die gefräste Linse in die Aufnahme an der Werkstückspindel 24 der Dreheinheit 11 einlegen. Nach Zurückfahren des Dreifach-Saugerkopfes 59 schließt der in den Figuren nicht dargestellte Spritzschutz der Maschine 10, und die Fräs- und Drehbearbeitung der beiden Linsen startet. Während dieser Bearbeitung legt der Saugerkopf 59 die bearbeitete Linse in einem Arbeitskasten 60 ab und saugt einen neuen Rohling für die nächste Bearbeitung an, danach wird der Saugerkopf 59 in Warteposition gefahren. Sobald die Bearbeitung der beiden Linsen beendet ist, erfolgt ein erneuter Be- und Endladevorgang. Dieser Be- und Entladevorgang ist in den Fig. 2 und 6 bis 10 näher gezeigt.

In den Fig. 2 und 6 ist das Halbfertigteil (rechtsschräg schraffiert) an der Werkstückspindel 24' der Fräseinheit 12 aufgenommen, während das Fertigteil (kreuzschraffiert) an der Werkstückspindel 24 der Dreheinheit 11 aufgenommen ist. Beide Werkstückspindeln 24, 24' befinden sich, was die Lage in der x-Richtung (Werkstückspindel 24) bzw. in der z-Richtung (Werkstückspindel 24') angeht, in der Be-/ Entladeposition. Der Arbeitskasten 60 steht mit dem Rohteil (nicht schraffiert) in der Position zum Be- und Entladen.

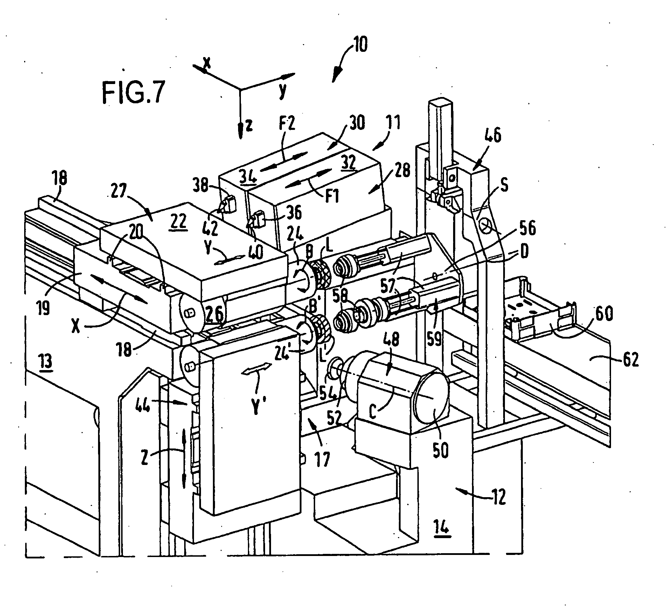

Ein Zylinder 57 steht über dem Rohteil, fährt aus und saugt mit seinem Sauger 58 das Rohteil mit Vakuum an. Sodann fährt der Zylinder 57 wieder ein. In der Folge wird der Saugerkopf 59 um 90° um eine Schwenkachse S in den Arbeitsraum 17 eingeschwenkt. Nach Erreichen der 90°-Position stehen die beiden in Fig. 7 linken Zylinder 57 des Saugerkopfs 59 in axial ausgefluchteter Lage zu den Werkstück-Drehachsen B, B' der Werkstückspindeln 24, 24' der Dreheinheit 11 bzw. der Fräseinheit 12. Sämtliche Zylinder 57 sind ausgefahren.

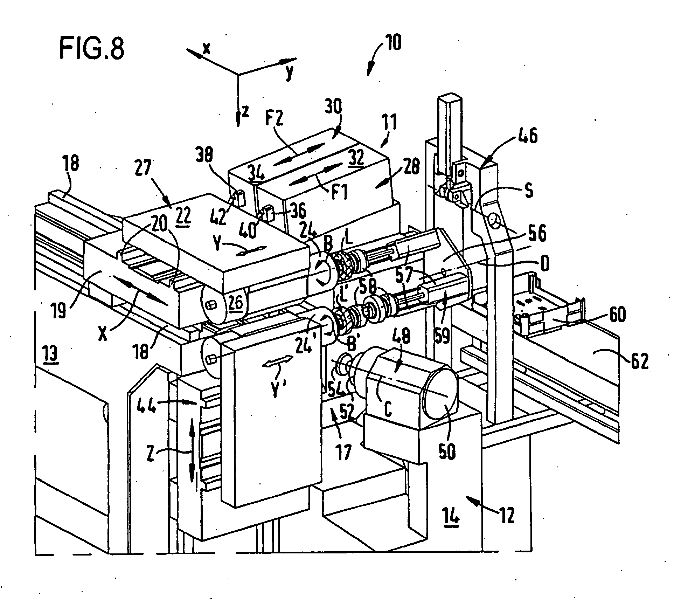

Nun werden die Werkstückspindeln 24, 24' durch entsprechende Ansteuerung der Y-Achse der ersten Werkstückspindeleinheit 27 bzw. der Y'-Achse der zweiten Werkstückspindeleinheit 44 in Richtung des Saugerkopfs 59 bewegt, wie die Fig. 8 zeigt. Die Sauger 58 an den jeweiligen Zylindern 57 stehen nun auf dem Halbfertigteil bzw. dem Fertigteil.

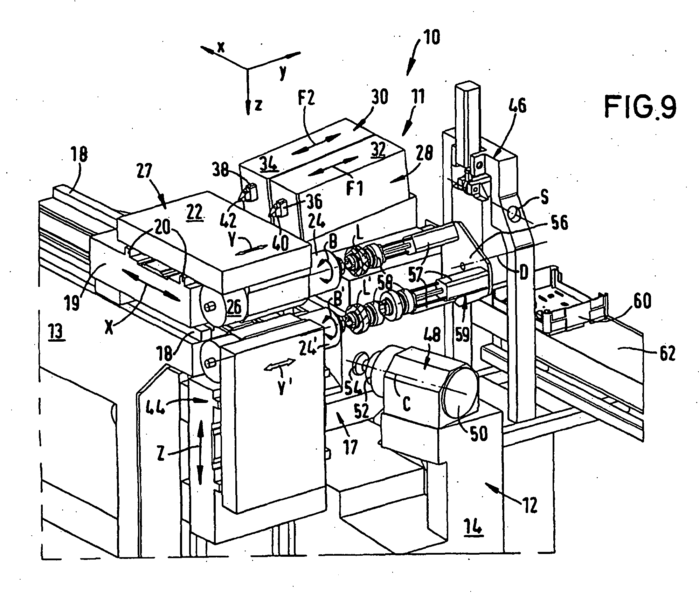

Über die Sauger 58 werden das Halbfertigteil und das Fertigteil jetzt angesaugt, worauf die Werkstückspindeln 24, 24' nach Lösen der Werkstücke durch Ansteuerung in der Y-Achse bzw. der Y'-Achse wieder zurückgefahren werden. Halbfertigteil und Fertigteil sind nun an den Saugern 58 gehalten (Fig. 9).

In der Folge wird der Drehteller 56 um 120° um seine Drehachse D gedreht. Während das Rohteil die Position der Werkstück-Drehachse B' der Fräseinheit 12 erreicht, erreicht das Halbfertigteil die Position der Werkstück-Drehachse B der Dreheinheit 11. Zugleich wird das Fertigteil von der Position der Werkstück-Drehachse B der Dreheinheit 11 auf die "freie" Position verschwenkt. Nun können das Rohteil an der Werkstückspindel 24' der Fräseinheit 12 und zugleich das Halbfertigteil an der Werkstückspindel 24 der Dreheinheit 11 abgesetzt werden, wofür die Y-Achse bzw. die Y'-Achse entsprechend angesteuert wird.

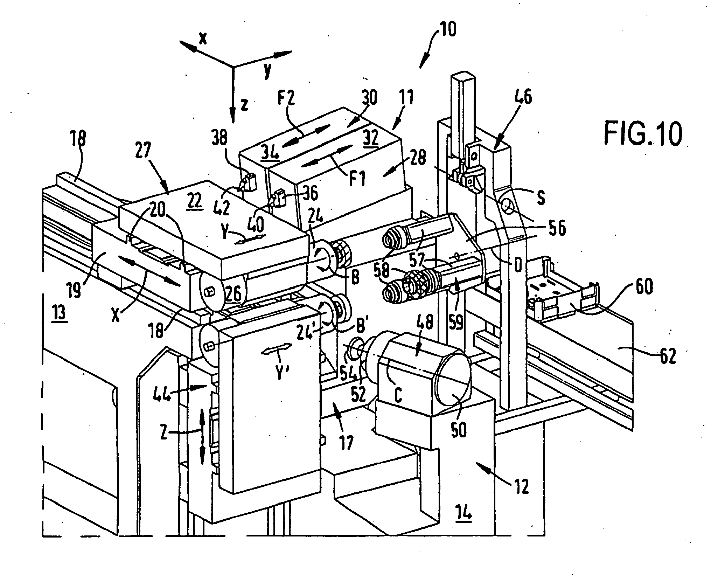

Nach Aufspannen von Rohteil und Halbfertigteil an der Werkstückspindel 24 bzw. 24' werden die Y- und Y'-Achsen zurückgefahren, so daß sich der in Fig. 10 dargestellte Zustand ergibt. In der Folge werden die Zylinder 57 eingefahren und der Saugerkopf 59 wird durch Verschwenken um die Schwenkachse S aus dem Arbeitsraum 17 herausbewegt, so daß das Fertigteil - durch entsprechende Ansteuerung der Zylinder 57 - im Arbeitskasten 60 abgelegt werden kann, während das Rohteil in der Fräseinheit 12 fräsbearbeitet und das Halbfertigteil in der Dreheinheit 11 drehbearbeitet wird.

Nach der Bearbeitung kann der Be- und Entladevorgang erneut beginnen. Hierfür kann ein neuer Arbeitskasten 60 mittels eines Transportbands 62 der Ladeeinrichtung 46 unter den Saugerkopf 59 gefahren werden, während der alte Arbeitskasten 60 vom Transportband 62 zugleich aus der Be-/Entladeposition weggefahren wird.

Es wird u.a. ein Verfahren zur Bearbeitung von Brillengläsern mit einer Maschine offenbart, die in einem gemeinsamen Arbeitsraum wenigstens eine Fräseinheit und wenigstens eine Dreheinheit aufweist, wobei in dem Arbeitsraum mindestens zwei Brillengläser gleichzeitig bearbeitet werden, von denen das eine gefräst wird, während das andere gedreht wird. Weitere Aspekte der vorgeschlagenen Maschine bestehen darin, daß die Maschinengestelle der Fräseinheit und der Dreheinheit voneinander im wesentlichen schwingungsentkoppelt sind und ggf. wenigstens zwei Bearbeitungseinheiten der Maschine Werkstückspindeleinheiten zur Erzeugung einer Querbewegung des zu bearbeitenden Brillenglases bezüglich des jeweiligen Werkzeugs haben, die im wesentlichen senkrecht zueinander stehen. Im Ergebnis ist eine Brillenglasbearbeitung in extrem kurzer Zeit mit hoher Zerspanungsleistung und großer Flächengenauigkeit und -güte möglich.

### BEZUGSZEICHENLISTE

- 10: Maschine
- 11: Dreheinheit
- 12: Fräseinheit
- 13: erstes Maschinengestell
- 14: zweites Maschinengestell
- 15: Luftfederelement
- 16: Maschinenrahmen
- 17: Arbeitsraum
- 18: Führungsschiene
- 19: X-Schlitten
- 20: Führungsschiene
- 22: Y-Schlitten
- 24, 24': Werkstückspindel
- 26: Elektromotor
- 27: erste Werkstückspindeleinheit
- 28: Fast-Tool-Anordnung
- 30: Fast-Tool-Anordnung
- 32: Aktuator
- 34: Aktuator
- 36: Schlitten
- 38: Schlitten
- 40: Drehmeißel
- 42: Drehmeißel
- 44: zweite Werkstückspindeleinheit
- 46: Ladeeinrichtung
- 48: Frässpindeleinheit
- 50: Elektromotor
- 52: Frässpindel
- 54: Fräswerkzeug
- 56: Drehteller
- 57: Zylinder
- 58: Sauger
- 59: Saugerkopf
- 60: Arbeitskasten
- 62: Transportband

- α: Anstellwinkel

- x: Breitenrichtung
- y: Längsrichtung
- z: Höhenrichtung

- B: Werkstück-Drehachse (Dreheinheit)
- B': Werkstück-Drehachse (Fräseinheit)
- C: Fräser-Drehachse
- D: Drehachse des Saugerkopfs
- F1: Linearachse 1. Fast-Tool
- F2: Linearachse 2. Fast-Tool
- L, L': Werkstück / Brillenglas
- S: Schwenkachse des Saugerkopfs
- X: Linearachse Werkstück (Dreheinheit)
- Y: Linearachse Werkstück (Dreheinheit)
- Y': Linearachse Werkstück (Fräseinheit)
- Z: Linearachse Werkstück (Fräseinheit)

## Patentansprüche

1. Verfahren zur Bearbeitung von Brillengläsern als Werkstückes (L, L') mit einer Maschine (10), die in einem gemeinsamen Arbeitsraum (17) wenigstens eine Fräseinheit (12) und wenigstens eine Dreheinheit (11) aufweist, wobei in dem Arbeitsraum (17) mindestens zwei Werkstücke (L, L') gleichzeitig bearbeitet werden, von denen das eine gefräst wird, während das andere gedreht wird.

2. Maschine (10) zur Bearbeitung von Werkstücken (L, L'), mit wenigstens einer ein Maschinengestell (14) aufweisenden Fräseinheit (12) und wenigstens einer ein Maschinengestell (13) aufweisenden Dreheinheit (11) als Bearbeitungseinheiten (11, 12), **dadurch gekennzeichnet, daß** die Maschinengestelle (13, 14) voneinander im wesentlichen schwingungsentkoppelt sind, wofür mindestens eines der Maschinengestelle (13, 14) über Schwingungsentkopplungselemente (15) auf einem gemeinsamen Maschinenrahmen (16) montiert ist, wobei die Maschinengestelle (13, 14) der Fräseinheit (12) und der Dreheinheit (11) einen gemeinsamen Arbeitsraum (17) begrenzen, in dem insbesondere Brillengläser als die Werkstücke (L, L') gleichzeitig mit der Fräseinheit (12) und der Dreheinheit (11) bearbeitbar sind.

3. Maschine (10) nach Anspruch 2, **dadurch gekennzeichnet, daß** jede Bearbeitungseinheit (11, 12) mindestens ein Werkzeug (40, 42, 54) sowie eine Werkstückspindeleinheit (27, 44) aufweist, mittels der das zu bearbeitende Werkstück (L, L') wenigstens in einer quer zum jeweiligen Werkzeug (40, 42, 54) verlaufenden Achsrichtung (X, Z) bewegbar ist, wobei die Werkstückspindeleinheiten (27, 44) derart zueinander angeordnet sind, daß besagte Achsrichtungen (X, Z) im wesentlichen senkrecht zueinander stehen.

4. Maschine (10) nach Anspruch 2 oder 3, **dadurch gekennzeichnet, daß** die Maschinengestelle (13, 14) der Bearbeitungseinheiten (11, 12) einander nicht berühren.

5. Maschine (10) nach einem der Ansprüche 2 bis 4, **dadurch gekennzeichnet, daß** es sich bei den Schwingungsentkopplungselementen um Luftfederelemente (15) handelt.

6. Maschine (10) nach einem der Ansprüche 2 bis 5, **dadurch gekennzeichnet, daß** die Maschinengestelle (13, 14) der Bearbeitungseinheiten (11, 12) aus Polymerbeton bestehen.

7. Maschine (10) nach einem der Ansprüche 2 bis 6, **dadurch gekennzeichnet, daß** jeder Bearbeitungseinheit (11, 12) eine Werkstückspindeleinheit (27, 44) zugeordnet ist, die eine Werkstückspindel (24, 24') mit einer Werkstück-Drehachse (B, B') aufweist, wobei jede Werkstückspindel (24, 24') mittels einer Kreuztischanordnung (18-22) CNC-lagegeregelt in einer Ebene (X-Y, Y'-Z) bewegbar ist, welche die jeweilige Werkstück-Drehachse (B, B') enthält.

8. Maschine (10) nach Anspruch 7, **dadurch gekennzeichnet, daß** die Kreuztischanordnung (18-22) jeder Werkstückspindeleinheit (27, 44) Führungsschienen (18, 20) und Schlitten (19, 22) umfaßt, wobei wenigstens die Führungsschienen (18, 20) und die Schlitten (19, 22) der Werkstückspindeleinheiten (27, 44) als Gleichteile ausgebildet sind.

9. Maschine (10) nach einem der Ansprüche 2 bits 8, **dadurch gekennzeichnet, daß** eine der Bearbeitungseinheiten eine Dreheinheit (11) mit wenigstens zwei Fast-Tool-Anordnungen (28, 30) ist, die jeweils einen mittels eines Aktuators (32, 34) axial bewegbaren Schlitten (36, 38) für einen Drehmeißel (40, 42) aufweisen, um letzteren in einer Fast-Tool-Bewegungsebene (X-F1, X-F2) zu bewegen.

10. Maschine (10) nach Anspruch 9, **dadurch gekennzeichnet, daß** die Bewegungen der Schlitten (36, 38) der Fast-Tool-Anordnungen (28, 30) unabhängig voneinander regelbar sind, so daß die Schlitten (36, 38) insbesondere gegenläufig bewegbar sind.

11. Maschine (10) nach einem der Ansprüche 2 bis 10, **dadurch gekennzeichnet, daß** die Bearbeitungseinheiten (11, 12) mittels einer Ladeeinrichtung (46) simultan mit Werkstücken (L, L') beschickbar sind.

12. Maschine (10) nach Anspruch 11, **dadurch gekennzeichnet, daß** die Ladeeinrichtung (46) einen Kopf (59) aufweist, der von einer Position, in der er einem Arbeitskasten (60) bzw. einem Transportband (62) für die Werkstücke (L, L') gegenüberliegt, um eine Schwenkachse (S) in den Arbeitsraum (17) der Maschine (10) hinein verschwenkbar ist und umgekehrt.

13. Maschine (10) nach Anspruch 11 oder 12, **dadurch gekennzeichnet, daß** die Ladeeinrichtung (46) einen Kopf (59) aufweist, der eine Mehrzahl von auf einem gemeinsamen, um eine Drehachse (D) drehbaren Drehteller (56) angeordneten, über Zylinder (57) in axialer Richtung ausfahrbaren Saugern (58) zum Ansaugen und Halten der Werkstücke (L, L') mittels Vakuum besitzt.

14. Maschine (10) nach Anspruch 13, **dadurch gekennzeichnet, daß** die Werkstückspindeln (24, 24') der Bearbeitungseinheiten (11, 12) mittels der zugeordneten Kreuztischanordnungen (18-22) quer zu den Werkstück-Drehachsen (B, B') in eine Be-/ Entladeposition bewegbar sind, in der die Werkstück-Drehachsen (B, B') mit jeweils einem Zylinder (57) des im Arbeitsraum (17) positionierten Kopfes (59) der Ladeeinrichtung (46) axial ausgefluchtet sind, worauf die Werkstückspindeln (24, 24') mittels der Kreuztischanordnungen (18-22) entlang der Werkstück-Drehachsen (B, B') in Richtung des Kopfes (59) der Ladeeinrichtung (46) bewegbar sind, um die Werkstücke (L, L') zu wechseln.

## Claims

1. Method for machining spectacle lenses as workpieces (L, L') by means of a machine (10) which comprises at least one cutting unit (12) and at least one turning unit (11) in a common working space (17), wherein at least two workpieces (L, L') are machined at the same time in the working space (17), one of said workpieces being cut while the other is turned.

2. Machine (10) for machining workpieces (L, L'), comprising at least one cutting unit (12) with a machine frame (14) and at least one turning unit (11) with a machine frame (13) as machining units (11, 12), **characterized in that** the machine frames (13, 14) are essentially decoupled from one another in terms of vibration, for which at least one of the machine frames (13, 14) is mounted on a common machine pedestal (16) via vibration decoupling elements (15), wherein the machine frames (13, 14) of the cutting unit (12) and the turning unit (11) delimit a common working space (17) in which particularly spectacle lenses as the workpieces (L, L') can be machined at the same time by the cutting unit (12) and the turning unit (11).

3. Machine (10) according to Claim 2, **characterized in that** each of the machining units (11, 12) comprises at least one tool (40, 42, 54) and a workpiece spindle unit (27, 44) by means of which the workpiece (L, L') to be machined can be moved in at least one axis direction (X, Z) running transversely to the respective tool (40, 42, 54), wherein the workpiece spindle units (27, 44) are arranged with respect to one another in such a way that said axis directions (X, Z) are essentially perpendicular to one another.

4. Machine (10) according to Claim 2 or 3, **characterized in that** the machine frames (13, 14) of the machining units (11, 12) do not make contact with one another.

5. Machine (10) according to any of Claims 2 to 4, **characterized in that** the vibration decoupling elements are air spring elements (15).

6. Machine (10) according to any of Claims 2 to 5, **characterized in that** the machine frames (13, 14) of the machining units (11, 12) are made of polymer concrete.

7. Machine (10) according to any of Claims 2 to 6, **characterized in that** each machining unit (11, 12) is assigned a workpiece spindle unit (27, 44) which comprises a workpiece spindle (24, 24') with a workpiece rotation axis (B, B'), wherein each workpiece spindle (24, 24') can be moved by means of a cross table arrangement (18-22) in a CNC-controlled manner in a plane (X-Y, Y'-Z) which contains the respective workpiece rotation axis (B, B').

8. Machine (10) according to Claim 7, **characterized in that** the cross table arrangement (18-22) of each workpiece spindle unit (27, 44) comprises guide rails (18, 20) and slides (19, 22), wherein at least the guide rails (18, 20) and the slides (19, 22) of the workpiece spindle units (27, 44) are designed as identical parts.

9. Machine (10) according to any of Claims 2 to 8, **characterized in that** one of the machining units is a turning unit (11) comprising at least two fast tool arrangements (28, 30) which in each case have a shuttle (36, 38) for a turning tool (40, 42), which shuttle can be moved axially by means of an actuator (32, 34) so as to move said turning tool in a fast tool movement plane (X-F1, X-F2).

10. Machine (10) according to Claim 9, **characterized in that** the movements of the shuttles (36, 38) of the fast tool arrangements (28, 30) can be controlled independently of one another, so that the shuttles (36, 38) can be moved in particular in opposite directions.

11. Machine (10) according to any of Claims 2 to 10, **characterized in that** the machining units (11, 12) can be simultaneously loaded with workpieces (L, L') by means of a loading device (46).

12. Machine (10) according to Claim 11, **characterized in that** the loading device (46) comprises a head (59) which can be pivoted about a pivot axis (S) from a position in which it lies opposite a working box (60) or a conveyor belt (62) for the workpieces (L, L') into the working space (17) of the machine (10) and vice versa.

13. Machine (10) according to Claim 11 or 12, **characterized in that** the loading device (46) comprises a head (59) which has a plurality of suction cups (58) for picking up and holding the workpieces (L, L') by means of vacuum, which suction cups can be extended in the axial direction via cylinders (57) and are arranged on a common rotating disc (56) which can be rotated about a rotation axis (D).

14. Machine (10) according to Claim 13, **characterized in that** the workpiece spindles (24, 24') of the machining units (11, 12) can be moved by means of the associated cross table arrangements (18-22) transversely to the workpiece rotation axes (B, B') into a loading/unloading position in which the workpiece rotation axes (B, B') are axially aligned with a respective cylinder (57) of the head (59) of the loading device (46) which is positioned in the working space (17), whereupon the workpiece spindles (24, 24') can be moved by means of the cross table arrangements (18-22) along the workpiece rotation axes (B, B') in the direction of the head (59) of the loading device (46) in order to change the workpieces (L, L').

## Revendications

1. Procédé pour l'usinage ou le façonnage de verres de lunettes en tant que pièces d'oeuvre (L, L'), à l'aide d'une machine (10) qui comporte dans un espace de travail (17) commun, au moins une unité de fraisage (12) et au moins une unité de tournage (11), où dans l'espace de travail (17) sont usinées simultanément au moins deux pièces d'oeuvre (L, L'), dont l'une est soumise à une opération de fraisage pendant que l'autre est soumise à une opération de tournage.

2. Machine (10) pour l'usinage ou le façonnage des pièces d'oeuvre (L, L'), comprenant au moins une unité de fraisage (12) présentant un châssis de machine (14) et au moins une unité de tournage (11) présentant un châssis de machine (13), en tant qu'unités d'usinage (11, 12), **caractérisée en ce que** les châssis de machine (13, 14) sont sensiblement découplés l'un de l'autre sur le plan de la transmission des vibrations, ce pour quoi au moins l'un des châssis de machine (13, 14) est monté par l'intermédiaire d'éléments de découplage de vibrations (15) sur un bâti de machine (16) commun, les châssis de machine (13, 14) de l'unité de fraisage (12) et de l'unité de tournage (11) délimitant un espace de travail commun (17) dans lequel en particulier des verres de lunettes en tant que pièces d'oeuvre (L, L') peuvent être usinés simultanément avec l'unité de fraisage (12) et l'unité de tournage (11).

3. Machine (10) selon la revendication 2, **caractérisée en ce que** chaque unité d'usinage (11, 12) comprend au moins un outil (40, 42, 54) ainsi qu'une unité de broche porte-pièce (27, 44) au moyen de laquelle la pièce d'oeuvre (L, L') à usiner peut être déplacée dans au moins une direction d'axe (X, Z) s'étendant transversalement par rapport à l'outil (40, 42, 54) respectif, les unités de broches porte-pièce (27, 44) étant agencées l'une par rapport à l'autre de manière telle, que les directions d'axe (X, Z) soient sensiblement perpendiculaires l'une à l'autre.

4. Machine (10) selon la revendication 2 ou 3, **caractérisée en ce que** les châssis de machine (13, 14) des unités d'usinage (11, 12) ne se touchent pas mutuellement.

5. Machine (10) selon l'une des revendications 2 à 4, **caractérisée en ce qu'**il s'agit en ce qui concerne les éléments de découplage de vibrations, d'éléments de ressorts pneumatiques (15).

6. Machine (10) selon l'une des revendications 2 à 5, **caractérisée en ce que** les châssis de machine (13, 14) des unités d'usinage (11, 12) sont réalisés en béton polymère.

7. Machine (10) selon l'une des revendications 2 à 6, **caractérisée en ce que** à chaque unité d'usinage (11, 12) est associée une unité de broche porte-pièce (27, 44) qui comprend une broche porte-pièce (24, 24') avec un axe de rotation de pièce (B, B'), chaque broche porte-pièce (24, 24') pouvant être déplacée au moyen d'un agencement de chariots croisés (18-22), de manière régulée en position par commande numérique, dans un plan (X-Y, Y'-Z) qui contient l'axe de rotation de pièce (B, B') respectif.

8. Machine (10) selon la revendication 7, **caractérisée en ce que** l'agencement de chariots croisés (18-22) de chaque unité de broche porte-pièce (27, 44) comprend des glissières de guidage (18, 20) et des chariots (19, 22), au moins les glissières de guidage (18, 20) et les chariots (19, 22) des unités de broches porte-pièce (27, 44) étant réalisées en tant que pièces identiques.

9. Machine (10) selon l'une des revendications 2 à 8, **caractérisée en ce que** l'une des unités d'usinage est une unité de tournage (11) avec au moins deux agencements dits fast-tool ou agencements d'outil rapide (28, 30), qui présentent chacun un chariot (36, 38) axialement mobile au moyen d'un actionneur (32, 34) pour un outil de tournage (40, 42), en vue de déplacer ce dernier dans un plan de déplacement d'outil rapide (X-F1, X-F2).

10. Machine (10) selon la revendication 9, **caractérisée en ce que** les mouvements des chariots (36, 38) des agencements d'outil rapide (28, 30) peuvent être régulés indépendamment les uns des autres, de sorte que les chariots (36, 38) peuvent être déplacés notamment en opposition.

11. Machine (10) selon l'une des revendications 2 à 10, **caractérisée en ce que** les unités d'usinage (11, 12) peuvent être alimentées simultanément avec des pièces d'oeuvre (L, L') au moyen d'un dispositif de chargement (46).

12. Machine (10) selon la revendication 11, **caractérisée en ce que** le dispositif de chargement (46) présente une tête (59) qui, d'une position dans laquelle elle est en regard d'un boitier de travail (60) ou d'une bande de transport (62) pour les pièces d'oeuvre (L, L'), peut pivoter, autour d'un axe de pivotement (S), jusqu'à l'intérieur de l'espace de travail (17) de la machine (10), et inversement.

13. Machine (10) selon la revendication 11 ou 12, **caractérisée en ce que** le dispositif de chargement (46) présente une tête (59) possédant une pluralité de ventouses d'aspiration (58), qui sont disposées sur un disque tournant (56) commun pouvant tourner autour d'un axe de rotation (D), et qui peuvent être extraites dans la direction axiale par l'intermédiaire de vérins (57) pour aspirer et maintenir les pièces d'oeuvre (L, L') au moyen de vide.

14. Machine (10) selon la revendication 13, **caractérisée en ce que** les broches porte-pièce (24, 24') des unités d'usinage (11, 12) peuvent être déplacées, au moyen des agencements de tables croisées (18-22), transversalement aux axes de rotation de pièce (B, B'), dans une position de chargement/déchargement, dans laquelle les axes de rotation de pièce (B, B') sont alignés axialement respectivement avec un vérin (57) de la tête (59) du dispositif de chargement (46), qui est positionnée dans l'espace de travail (17), suite à quoi les broches porte-pièce (24, 24') peuvent être déplacées au moyen des agencements de tables croisées (18-22), le long des axes de rotation de pièce (B, B'), en direction de la tête (59) du dispositif de chargement (46), en vue d'assurer le changement des pièces d'oeuvre (L, L').
